# EUROPEAN PATENT APPLICATION

(11) **EP 4 790 613 A1**
(43) Date of publication of application: **12.08.2026**
(21) Application number: 26151801.3
(22) Date of filing: 14.01.2026
(51) Int. Cl.: G06Q 10/0633, G06Q 10/0837

(54) **MANAGING WORKFLOWS EXECUTED BY PRODUCT RECALL MANAGEMENT SYSTEMS**

(30) Priority: 05.02.2025 US 202519045562
(71) Applicant: Honeywell International Inc., Charlotte, NC 28202 (US)
(72) Inventor: SINGH, Ankit, Charlotte, 28202 (US); PAILA, Lakshminarayana, Charlotte, 28202 (US); SINGH, Varun Shekhar, Charlotte, 28202 (US)
(74) Representative: Haseltine Lake Kempner LLP

(57) **Abstract**

Examples techniques to manage workflow executed by product recall management system PRMS are described. Correlation information associated with a first step of the workflow for recall of a product is retrieved. The first step comprises first action item to be executed by a first user and correlation information identifies second action item, associated with a second step of workflow, initiation of execution of which depends upon completion of execution of first action item. A visual indicator depicting logical association of pendency of second action item with pendency of first action item is presented to first user based on correlation information. Status of first and second step is determined based on execution of respective action items. If status of first step is pending, a schedule for completion of execution of first action item is generated based on scheduled date of completion of recall and depicted to first user through visual indicator.

## Description

### BACKGROUND

A wide variety of products, including medical devices, consumable items, automotive, toys, food products, pharmaceuticals, and various types of equipment, are manufactured for release into a consumer market. These products are designed to serve various purposes and are expected to meet safety standards for use by consumers. Manufacturing process for these products is typically predefined and may involve several stages, including production, testing, and post-manufacturing activities, such as packaging and distribution. To ensure a predefined quality of a product, each activity within these stages is carried out in accordance with standard operating procedures (SOPs). For instance, the SOPs may dictate testing parameters for medical devices or storage conditions for pharmaceutical ingredients.

Despite these precautions, there may be instances where the products are discovered to be unsafe after they have been made available to consumers. Such safety concerns may arise from design oversights, production anomalies, or inadvertent use of harmful substances. When faced with these issues, manufacturers of the products may be responsible for taking corrective action, which may include initiating voluntary recall or complying with recall mandated by regulatory authorities.

Recall process of the affected products may be complex, requiring communication with stakeholders, including consignees, to return affected products, coordination for product returns, information dissemination, and consumer support. The financial and operational costs may be substantial, including recall execution, refunds, and compensation. Also, a recall decision may have lasting impacts on the reputation of the manufacturer of the products to be recalled and on consumer trust. Therefore, it is important to manage the recall in accordance with appropriate predefined processes that comply with regulatory requirements and optimize communication efficiency.

Product Recall Management Systems (PRMS) may be employed by the manufacturers to effectively manage the product recall process, streamline communications, and ensure compliance with regulatory requirements.

### SUMMARY

Various embodiments of systems, methods, and non-transitory computer-readable media for managing workflows executed by a product recall management system are described herein.

The details of some embodiments of the subject matter described in this specification are set forth in the accompanying drawings and the description below. Other features, aspects, and advantages of the subject matter will become apparent from the description, the drawings, and the claims.

According to an embodiment of the present subject matter, a system for managing workflows executed by a PRMS is provided. The system comprises a processor. For a workflow comprising one or more steps of a process executable by the PRMS for recall of a product, the processor retrieves correlation information associated with a first step of the one or more steps. Each of the one or more steps comprises an action item to be executed by a corresponding user. The correlation information identifies an action item associated with a second step of the one or more steps, the initiation of execution of which is to be caused upon completion of execution of the action item associated with the first step. The processor represents a visual indicator based on the correlation information to an authorized user of the first step. The visual indicator depicts a logical association of a pendency of the action item associated with the second step with a pendency of the action item associated with the first step. The processor determines a status of the first step and the second step based on execution of the action item associated with the respective steps. Upon the status of the first step being determined to be pending, the processor generates a schedule for completion of execution of the action item associated with the first step based on a predefined schedule of completion of execution of the action item associated with the second step. The visual indicator depicts the generated schedule to the authorized user of the first step

According to an embodiment of the present subject matter, a method for managing workflows executed by a PRMS is provided. According to the method, correlation information associated with a first step of a workflow executable for recall of a set of products is retrieved. The first step comprises a first action item to be executed by a first user, and the correlation information identifies a second action item associated with a second step of the workflow, the initiation of execution of second action item to be caused upon completion of execution of the first action. A visual indicator is represented based on the correlation information to the first user. The visual indicator depicts a logical association of a pendency of the second action item with a pendency of the first action item. A status of the first step and the second step is determined based on execution of the first action item and the second action item, respectively. Finally, upon the status of the first step being determined to be pending, a schedule for completion of execution of the first action item is generated based on a scheduled date of completion of recall of the set of products, wherein the visual indicator depicts the generated schedule to the first user.

According to yet another embodiment of the present subject matter, a non-transitory computer-readable medium comprising instructions executable by a processing resource to manage workflows executed by a PRMS is provided. The instructions, when executed, cause the processing resource to obtain a correlation information associated with a first step of a workflow executable for recall of a product. The correlation information indicates that execution of at least one action item associated with a second step of the workflow is to be caused upon completion of execution of at least one action item associated with the first step. The instructions may also cause the processing resource to provide a visual indicator based on the correlation information to an authorized user of the first step. The visual indicator depicts dependency of execution of the at least one action item associated with the second step on execution of the at least one action item associated with the first step. The instructions may further cause the processing resource to determine status of the first step and the second step based on the execution of the at least one action item associated with the respective steps by corresponding authorized users. The instructions may cause the processing resource to generate, upon the status of the first step being determined to be pending, a schedule for completion of execution of the at least one action item associated with the first step based on a scheduled date of completion of recall of the set of products. The visual indicator depicts the generated schedule to the authorized user of the first step.

In accordance with example implementations of the present subject matter, the techniques for managing workflows executed by a PRMS described herein, indicate users working on the PRMS, how their current actions impact subsequent steps in the workflow and provide a clear timeline for completion of steps to which they are responsible for executing, based on the needs of subsequent dependent steps. The users are provided with a clear indication of which steps are blocked until the current step is completed. By providing this level of visibility and scheduling, efficient coordination among users working on the PRMS may be ensured. It also allows for timely initiation of subsequent steps and promotes smooth, synchronized execution of the entire recall workflow. Thus, the techniques described herein minimize delays and enhance the overall effectiveness of the product recall process.

### BRIEF DESCRIPTION OF FIGURES

The following detailed description references the drawings, wherein:
Fig. 1 illustrates a network environment for implementing example techniques to manage workflows executed by a product recall management system, in accordance with an example implementation of the present invention;
Fig. 2 illustrates a system for managing workflows executed by a PRMS, in accordance with an example implementation of the present invention;
Fig. 3 illustrates the system for managing workflows executed by the PRMS, in accordance with another example implementation of the present invention;
Fig. 4 illustrates an example user interface rendered by the system for managing workflows executed by the PRMS, in accordance with an example implementation of the present invention;
Figs. 5A and 5B illustrate another example user interface rendered by the system for managing workflows executed by the PRMS, according to an example of the present invention;
Fig. 6 illustrates a method for managing workflows executed by a PRMS, according to another example implementation of the present invention;
Fig. 7 illustrates a method for managing workflows executed by a PRMS, according to another example implementation of the present invention;
Fig. 8 illustrates a method for managing workflows executed by a PRMS, according to another example implementation of the present invention; and
Fig. 9 illustrates a computing environment for managing workflows executed by a PRMS, according to an example implementation of the present invention.

In the figures, the left-most digit(s) of a reference number identifies the figure in which the reference number first appears. The same numbers are used throughout the drawings to reference like features and components.

### DETAILED DESCRIPTION

A product or batches of products may be subject to a recall by a manufacturer for various reasons, including identification of safety concerns or product anomalies that may harm consumers or expose the manufacturer to legal liability. Occasionally, recalls are initiated also due to changes in regulations, leading to non-compliance of previously compliant products. The purpose of the recall is to address these issues by withdrawing affected products from a market or by rectifying an identified anomaly.

Manufacturers rely on PRMS to facilitate a recall process. The PRMSs are specialized tools designed to streamline the process of recalling a product or batches of products from the market. As mentioned above, through the recall process, manufacturers remove a product that is defective, hazardous, or does not meet safety standards from the market to protect consumers from potential harm, comply with regulatory requirements, and mitigate liability risks. The recall process can vary depending on the industry and the severity of the issue associated with defective product, but the recall process generally involves identification of the issue associated with the product, notifying regulatory authorities or agencies, identification of the affected products, regions and consumers, developing strategy for communication with stakeholders and corrective actions, e.g., refunds, replacements and compensations, communication with stakeholders including consignees and recall execution. Thus, the recall process involves execution of complex workflows. These workflows may be implemented in multiple stages and each stage of a workflow also comprises multiple interrelated steps. For instance, a PRMS may comprise two primary sub-systems: a recall decision sub-system and a recall execution sub-system. The recall decision sub-system may be tasked with an initial phase of assessing whether to initiate a recall for a product or batches of products. The recall decision sub-system employs workflows that provide means to collect data, conduct risk analyses, and support decision-making vis a vis the recall of the product. The recall execution sub-system, on the other hand, is configured to implement the execution of the recall once a decision has been made, providing the workflow and tools to do so.

Each stage or steps of the workflow may be handled by an authorized person whose role may be based on predefined rules. PRMSs are implemented to execute such complex workflows where each step or sub-step requires precise validation by respective authorized person. For example, business administrators may be responsible for application configurations like users' management, roles management, threshold configurations, data sources configurations etc., recall project manager (RPM) may be responsible for the project management for recall decisions, investigations and executions. Process owners and quality managers may carry out scientific investigations and evaluations and executive managers may approve or reject based on work done by other personas.

Conventional PRMSs may allow multiple users to perform some steps simultaneously so that steps could be expedited and not carried out sequentially which could potentially delay the workflow. However, there could be situations where execution of a step may be dependent on completion of execution of another step at the same stage or at another stage in the workflow. For instance, the recall decision sub-system conducts a risk investigation to assess the severity and scope of an anomaly, and if a recall is warranted, the recall decision sub-system triggers the recall execution sub-system. More specifically, outcome of step of approval/rejection of recall of a product in an investigation stage of the workflow executed by recall decision sub-system initiates the steps of recall execution stage of the workflow executed by the recall execution sub-system. The conventional PRMS systems do not provide an authorized user executing a step of the workflow, an indication of the interdependence of the operation of different steps of the workflow. In such situations, users executing the step dependent on another step or users executing a step upon which another step is dependent, do not get a visibility as to where the bottleneck is. Thus, execution of the workflow gets delayed. Such a lack of synchronization in the execution of workflow may potentially result in undesirable consequences, such as inefficiency of the recall process execution by the PRMS.

Also, the conventional PRMS systems do not provide an authorized user executing a step of the workflow, an indication of how long the user can take to execute the current step. For instance, if a user A knows he is blocking user B, user A can expedite execution of step which is blocking the execution of step which user B is responsible for execution. Unless A is made aware of the scheduled date of completion of the step to be executed by, the user A may not prioritize such execution and recall of the product may be delayed. A recall decision may have lasting impacts on the reputation of the manufacturer of the products to be recalled and on consumer trust. Therefore, it is important to manage the product recall in a timely manner.

According to example implementations of the present subject matter, techniques for managing workflows executed by a PRMS are described. The example methods and systems for managing workflows executed by the PRMS provide for an efficient recall process by improving synchronization in the execution of correlated steps of the workflows.

In accordance with example embodiments of the present subject matter, the PRMS may execute a workflow corresponding to a process of recall of a product. The workflow comprises one or more steps of the process of recall. Each of the one or more steps may comprise an action item to be executed by a corresponding authorized user. The action items may be specific tasks, or activities assigned to authorized users within the respective step in the course of completing the process of recall of the product. In an example, action item may comprise assigning roles to various users such as process owners or quality managers and collecting detailed manufacturing data for the product, such as batch numbers, production dates, raw material sources, and location of consignees and the like. As mentioned above, the one or more steps may be executed in accordance with a predefined order and execution of an action item associated with a step in the one or more steps may be dependent on execution of action items associated with one or more correlated steps from amongst the one or more steps of the workflow. Correlation information may be associated with each step of the workflow to identify an action item associated with a step whose execution is dependent on execution of another action item associated with another correlated step.

In an embodiment, according to the techniques for managing workflows executed by the PRMS, the correlation information associated with a first step of the one or more steps is retrieved. The correlation information identifies an action item associated with a second step of the one or more steps, the initiation of execution of which is to be caused upon completion of execution of the action item associated with the first step.

In an example implementation, a visual indicator is represented based on the correlation information to an authorized user of the first step. The visual indicator depicts a logical association of a pendency of the action item associated with the second step with a pendency of the action item associated with the first step. In an example, a block diagram representing steps of the workflow as blocks may be displayed on a user interface to the authorized user. The visual indicator may be represented as directional arrow between blocks representing the first step and the second step with arrowhead pointing towards the block representing the second step.

Further, statuses of the first step and the second step are determined based on execution of the action item associated with the respective steps. In an example, status of a step may be determined based on variable parameters or attributes values of which may be altered as a result of execution of action item associated with the step. If the status of the first step is determined to be pending, a schedule for completion of execution of the action item associated with the first step is generated based on a predefined schedule of completion of execution of the action item associated with the second step. The visual indicator depicts the generated schedule to the authorized user of the first step.

The visual indicator depicting the pendency of action item of the first step in relation to pendency of action item of the correlated second step, provides the authorized user of the first step a visibility about which steps are blocked from execution as a result of execution of the first step. The indicator also depicts a schedule for the user of the first step based on predefined schedules of the blocked second step. Accordingly, the authorized user of the first step is made aware that the second step is blocked and it is scheduled to be completed in XYZ date so that he can expedite the execution of the first step. This allows the timely initiation of execution of the blocked second step, after the execution of the preceding first step according to the generated schedule. The synchronization thus provided between the correlated steps ensures the smooth and efficient execution of workflow in a timely manner.

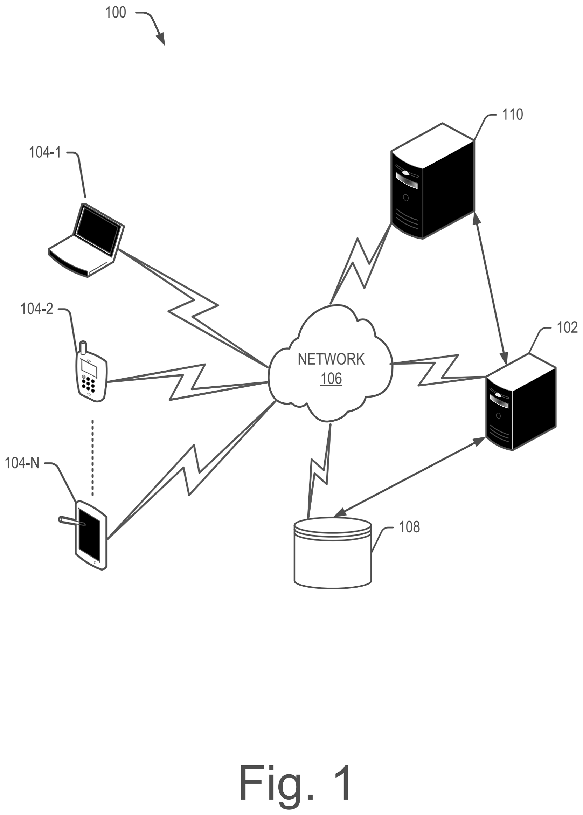

The above techniques are further described with reference to Fig. 1 to Fig. 9. It should be noted that the description and the Figures merely illustrate the principles of the present invention along with examples described herein and should not be construed as a limitation to the present invention. It is thus understood that various arrangements may be devised that, although not explicitly described or shown herein, embody the principles of the present invention. Moreover, all statements herein reciting principles, aspects, and implementations of the present invention, as well as specific examples thereof, are intended to encompass equivalents thereof.

Fig. 1 illustrates a network environment for implementing examples techniques for managing workflows executed by a PRMS, in accordance with an example implementation of the present invention.

Recall processes are implemented in various industries, such as automotive, pharmaceuticals, consumer goods, electronics, and food production, to ensure consumer safety and compliance with regulatory standards. The recall process may be initiated due to various reasons, including but not limited to, safety concerns that pose risks to consumers, product performance issues that do not meet specifications (such as functionality or durability problems) of manufacturer, potential contamination in food or pharmaceutical products, use of substandard materials in the manufacturing process, or newly discovered adverse effects in medical devices or drugs. In some instances, recalls may be precautionary measures taken in response to potential risks identified through post-market surveillance, even if no adverse events have been reported. Regulatory bodies may also mandate recalls based on their own investigations or reports from consumers, healthcare providers, or other stakeholders in the supply chain.

The recall processes often address additional requirements, such as timely response and minimization of negative impact on the reputation of a manufacturer and finances. As products that may be recalled are designed for a wide variety of uses, the criteria and urgency for recalls vary considerably to cater to the respective safety and compliance concerns associated with each type of product. Product recall management systems are tools used to streamline the recall process for recalling products that are found to be defective, for example, due to an anomaly, or non-compliance with regulatory guidelines. In many cases, these systems are designed to align with and enforce standard operating procedures (SOPs) specific to recall processes. SOPs may outline step-by-step instructions for initiating, executing, and documenting recalls, ensuring consistency and compliance across different recall scenarios.

In an example implementation of the present subject matter, the network environment 100 comprises a product recall management system (PRMS) 102. In an embodiment, the PRMS 102 may be implemented and operated by a manufacturer of a product to manage instances of recall of the product manufactured by the manufacturer. The PRMS 102 may be any computing device, such as a server, a desktop computer, laptop, smartphones, or a tablet. The PRMS 102 may comprise one or more processors for executing instructions to implement a process to recall a product. In an example, the processor may be implemented as microprocessors, microcomputers, microcontrollers, digital signal processors, central processing units, state machines, logic circuitries, and/or any devices that manipulate signals based on operational instructions. The PRMS 102 may comprise a memory for storing the instructions executable by the one or more processor. The instructions may cause the processor to execute the process of recall of the product. The memory may include any computer-readable medium known in the art including, for example, volatile memory (e.g., RAM), and/or non-volatile memory (e.g., EPROM, flash memory, etc.). The memory may also be an external memory unit, such as a flash drive, a compact disk drive, an external hard disk drive, or the like.

The PRMS 102 may receive a complaint regarding an anomaly in a product or a request to recall a product, for example, from one or more computing devices 104-1, 104-2, ..., 104-N including devices of consumers of the product, or devices executing internal quality monitoring processes at manufacturing locations, via a network 106. In an example, the network 106 may be a single network or a combination of multiple networks and may use a variety of different communication protocols. The network 106 may be a wireless or a wired network, or a combination thereof. Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NON), Public Switched Telephone Network (PSTN). Depending on the technology, the network 106 includes various network entities, such as gateways, and routers; however, such details have been omitted for the sake of brevity of the present description.

On receiving the complaint of the product or the request to recall the product, a recall process may be initiated by an authorized user of the PRMS at the end of the manufacturer. The PRMS executes a workflow corresponding to the process of recall of the product. The workflow may comprise one or more steps and interrelated steps from amongst the one or more steps may be grouped into plurality of stages. Each step of the workflow may be executed by a corresponding authorized user whose role may be defined based on predefined rules, such as role or designation of the user in manufacturer's organization, expertise of the users or based on historic data indicating users executing the various steps of the workflow corresponding to a process of recall of a product.

Typically, a PRMS may comprise two primary sub-systems: a recall decision sub-system and a recall execution sub-system to execute the process of recall of the product. The recall decision sub-system executes workflows for deciding whether to initiate a recall for a product or batches of products. Accordingly, the recall decision sub-system employs workflows that provide means to collect data, conduct risk analyses, and support decision-making vis a vis the recall of the product. The recall execution sub-system, on the other hand, is configured to execute workflows for the execution of the recall once a decision has been made to recall the product, providing the workflow and tools to do so.

At the initiation of process of the recall of the product, an authorized user may issue a request for an investigation of the product to the recall decision sub-system. A workflow executed by the recall decision sub-system may comprise multiple steps to perform the investigation, often referred to as risk investigation, that aims to assess the validity of the anomaly, severity, and scope of the anomaly in the product that prompted the request regarding the recall of the product to be raised. The risk investigation may involve gathering inputs from users, vendors, and other stakeholders and analysing data, such as customer complaints, and safety concerns related to the reported anomaly. The recall decision sub-system provides workflows implementing processes for the collection, updating, and maintenance of predefined information related to the products, which is a prerequisite for any recall decision and action to be taken and may be stored in a product database 108.

The product database 108 may additionally store data pertaining to various manufacturing stages of the product. The different types of data associated with the manufacturing of the product that may include information relating to compliance with the SOP, sensing physical conditions and events throughout the manufacturing process, as well as all the additional data associated with the manufacturing stages of the products, such as the supplier ID, the raw material ID, etc., may be stored in the product database 108. Data retrieved from the product database 108 may be relied upon to determine whether the anomaly poses a risk to consumers and if the anomaly warrants a recall of the product. Based on the risk investigation, if a decision to recall the product is made, in other words, the request for the recall of the product is approved at the recall decision sub-system, a request for execution of the recall of the product is sent to the recall execution sub-system.

The recall execution sub-system executes a workflow that provides for performing the steps necessary for the recall of the product. This includes notifying all stakeholders, managing the logistics of product returns, handling the affected products, maintaining accurate records of the recall process, and providing customer support. The workflow executed in the recall execution sub-system to carry out the recall of the product needs to ensure compliance with regulatory requirements, such as compiling reports on the progress of the recall process and outcomes allowing assessment of the effectiveness of the recall.

One or more action items may be associated with each step of the workflow and may be required to be executed during the execution of respective steps. Action items may refer to activities or tasks to be performed during execution of the respective steps. For instance, during a configuration step of the workflow corresponding to the product recall decision subsystem of the PRMS 102, action items may comprise configuring objects comprising detailed characteristics and identifiers of the product that may contribute to the recall decision and configuring filters comprising criteria or conditions used to evaluate whether those product characteristics present enough risk to warrant a recall. These action items may be executed by corresponding authorized users.

As delay in the process to recall the product has severe consequences on the safety of the consumers or users of the product and reputation of the manufacturer, some of the steps of the workflows corresponding to both product recall decision and product recall execution sub-systems may be executed in parallel. Also, execution of one or more action items of a step of the workflow may be dependent on the execution of one or more action items of another step of the workflow. The present invention provides a system 110 for managing workflows executed by the PRMS 102, such that an authorized user executing a step of the workflow of the process to recall the product may be made aware of dependency of execution of the step onto another correlated step of the workflow. Thus, steps that are not dependent on other steps can run in parallel, while the system allows scheduling of execution of steps of the workflow, based on dependency of dependent steps on other correlated steps, expediting the process to recall.

In accordance with example embodiments of the present subject matter, the system 110 may be coupled to the PRMS 102. The system 110 may be any computing device, such as a server, a desktop computer, laptop, smartphones, or a tablet. In another example, functionality of the system 110 may be implemented in the computing device implementing the PRMS 102. In an example, functionality of the system 110 may be implemented in the PRMS 102.

The system 110 may be configured to display a visual indicator depicting dependency of execution of a step onto execution of another step. The visual indicator may comprise a link between visual representations of the correlated steps in a user-interface depiction of the workflow. The user interface depiction of the workflow may be referred to as a navigation map. The visual representation of a step may comprise an icon or block of any shape with text describing the step displayed thereon. The link may be in the form of an arrow commencing from representation of the dependent step towards the correlated step or vice versa. This allows a user to identify a step that may be blocking the execution of step he is responsible for executing. Likewise, the visual indicator may also depict to a user of other steps that are dependent on execution of the step he is responsible for executing, thereby making the user aware if he may be delaying the progression of the recall process.

In accordance with example implementations of the present subject matter, the system 110 may also be configured to determine a status of each step of the workflow. The system may determine status of one or more action items based on execution of one or more action items of the step. If status of the correlated step is determined to be pending, the system may also generate a schedule for the completion of execution of the correlated step based on a scheduled date of completion of the process of recall of the product. The generated schedule may be notified to an authorized user of the correlated step to avoid delay in execution of the dependent step ensuring a compliance with the scheduled date of completion of the process.

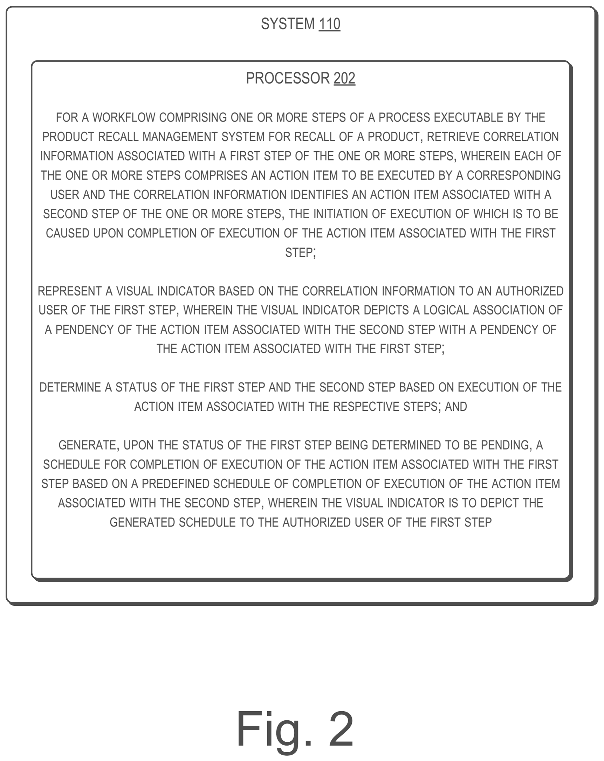

Fig. 2 shows the system 110 for managing workflows executed by a product recall management system, according to an example implementation of the present subject matter. The system 110 may be one or more computing devices, such as desktop computers, laptops, smartphones, personal digital assistants (PDAs), tablets and servers. In an example, the system 110 may comprise a processor 202. In an example, the processor 202 may be implemented as microprocessors, microcomputers, microcontrollers, digital signal processors, central processing units, state machines, logic circuitries, and/or any devices that manipulate signals based on operational instructions.

As explained previously with reference to Fig. 1, the system 110 manages execution of a workflow comprising one or more steps of a process executable by the PRMS 102 for recall of a product. For the purposes of the present description, any reference made to a product to be recalled may include a single product, a set or batch of a product, or multiple sets or batches of products. Each step of the process may have one or more action items associated therewith. The action items may refer to specific tasks or activities to be performed or executed by a corresponding authorized user. These tasks may include assigning roles to key personnel like process owners or quality managers, and gathering product information such as batch numbers, production dates, and raw material sources.

The workflow follows a predetermined sequence, with some steps dependent on completion of others. This interdependence is tracked through a correlation information associated with each step, identifying which action items must be completed before others can begin.

In an example, the processor 202 may retrieve correlation information associated with a first step of the one or more steps of the workflow. In an example, the correlation information may be created by an administrator based on business rules to comply with regulatory requirements. For example, consider a scenario where a statutory requirement mandates that a complaint regarding an issue with a medical device cannot be closed until a representative of the manufacturer of the device attests that a risk assessment process was carried out in accordance with rules prescribed by the statute. Thus, in this example scenario, there exists a dependency between closing of the complaint and attestation by the representative. The correlation information identifies an action item associated with a second step of the one or more steps, the initiation of execution of which is to be caused upon completion of execution of the action item associated with the first step. Accordingly, in the example scenario, the correlation information may identify that attestation by the representative needs to be completed prior to the step of the complaint being marked as 'closed'.

Once the processor 202 retrieves correlation information for a given step, indicating which subsequent steps are contingent on its completion, this information may be presented to users through visual indicators overlayed on a depiction of the workflow on a user-interface identifying the steps therein. The depiction of workflow on the user interface may be referred to as navigation map and may comprise links between the correlated steps. Overlayed information can be dynamic and may be changed with current status of the respective step in an example. The processor 202 may thus represent a visual indicator based on the correlation information to an authorized user of the first step. The visual indicator depicts a logical association of a pendency of the action item associated with the second step with a pendency of the action item associated with the first step. In an example, the visual indicator may be directional arrows showing the relationships between steps on the navigation map.

The processor 202 may determine status of the first step and the second step based on execution of the action item associated with the respective steps. The execution of action item may be monitored through variable parameters that may be altered or set as a result of execution of the action item. For example, an action item corresponding to a step of risk investigation of the workflow, may result in assigning a value to a variable indicative of risk factor in accordance with predefined scale. The value of parameter may be tracked or monitored to determine status of the step of risk investigation as pending or completed.

If the status of the first step is determined as pending, the processor may generate a schedule for completion of execution of the action item associated with the first step based on a predefined schedule of completion of execution of the action item associated with the second step. Thus, for pending steps, the system generates a schedule for completion that takes into account timelines or schedules of dependent steps. For example, if the second step is scheduled to be completed on or before 27 December 2024, then the generated schedule for completion of the first step may comprise a date prior to the date of 27 December 2024. The schedule may be generated considering the time required to complete the execution of action items associated with the second step to provide sufficient time for execution of the second step. In an example, to ascertain the time required to complete the execution of action items associated with the second step, the system 110 may rely on historic data relating to execution of the workflow for recall of the product or other similar products. This generated schedule may then be displayed to the authorized user responsible for the first step. In an example, the schedule may be overlayed on the visual representation of the first step on the navigation map. By providing a visibility of which steps are blocked until the current step is completed and scheduling the time of completion of steps accordingly, the PRMS ensures efficient coordination among team members working on a recall project on the PRMS. It allows for timely initiation of subsequent steps and promotes smooth, synchronized execution of the entire recall workflow.

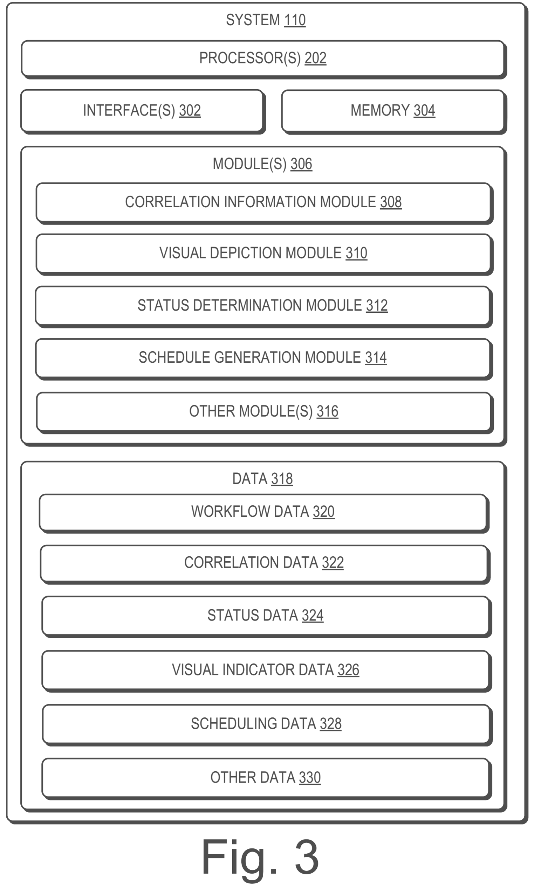

Fig. 3 illustrates the system 110 according to another example implementation of the present subject matter. In an example, the system 110 may be any computing device, such as servers, desktop computers, laptops, smartphones, personal digital assistants (PDAs), and tablets.

In an example, the system 110 comprises a processor, such as the above-described processor 202. In an example, the processor 202 may be implemented as microprocessors, microcomputers, microcontrollers, digital signal processors, central processing units, state machines, logic circuitries, and/or any devices that manipulate signals based on operational instructions. The system 110 also comprise interface(s) 302 coupled to the processor 202. The interface(s) 302 may include a variety of software and hardware interfaces that allow interaction of the system 110 with other communication and computing devices, such as network entities, web servers, and external repositories, and peripheral devices. The interface(s) 302 may also enable coupling of internal components of the system 110 with each other.

Further, the system 110 comprises a memory 304 coupled to the processor 202. The memory 304 may include any computer-readable medium known in the art including, for example, volatile memory (e.g., RAM), and/or non-volatile memory (e.g., EPROM, flash memory, etc.). The memory may also be an external memory unit, such as a flash drive, a compact disk drive, an external hard disk drive, or the like. The system 110 may comprise module(s) 306 and data 318 coupled to the processor 202. In one example, the module(s) 306 and the data 318 may reside in the memory 304.

In an example, the data 318 may comprise a workflow data 320, correlation data 322, status data 324, visual indicator data 326, scheduling data 328 and other data 330. The module(s) 306 may include routines, programs, objects, components, data structures, and the like, which perform particular tasks or implement particular abstract data types. The module(s) 306 further includes modules that supplement applications on the system 110, for example, modules of an operating system. The data 318 serves, amongst other things, as a repository for storing data that may be fetched, processed, received, or generated by one or more of the module(s) 306. The module(s) 306 may include a correlation information module 308, a visual depiction module 310, a status determination module 312, a schedule generation module 314 and other module(s) 316. The other module(s) 316 may include programs or coded instructions that supplement applications and functions, for example, programs in the operating system of the system 110.

As explained previously with reference to Fig. 1, system 110 may be implemented in a computing device implementing a PRMS and the functionality of the system 110 may be integrated in the PRMS, such as the PRMS 102. Manufacturers of products may need to recall the products due to identified anomalies, regulatory compliance, or precautionary measures based on potential risks. PRMSs are used to streamline the process of recalling the products. The PRMS 102 may be designed to align with and enforce SOPs specific to recall processes, ensuring consistency and compliance across different scenarios.

To execute the functionality of the PRMS 102, the system 110 may include two sub-systems: the recall decision sub-system and the recall execution sub-system. The recall decision sub-system is responsible for assessing risks and determining whether a recall is necessary. The recall decision sub-system analyzes data, evaluates potential hazards, and makes recommendations on whether to initiate a recall. The recall execution sub-system manages the actual implementation of a recall once it has been decided. In some embodiments, the inclusion of the recall decision sub-system in the system 110 may be optional and the system 110 may operate with only the recall execution sub-system. This configuration is useful in cases where the decision to recall a product is made outside the system 110. For example, a recall may be initiated based on consumer complaints or regulatory mandates without going through a decision process. In such cases, the recall decision is given directly to the recall execution sub-system to begin the recall process.

When a complaint or request to recall a set of products is received by the system 110, for example, from one or more computing devices of consignees or authorized personnels associated with a manufacturer, such as, the computing devices 104-1, 104-2, ..., 104-N, the system 110 executes a workflow for recall of the products. The workflow may be an ordered or structured set of one more steps to be executed for the recall of the products. One or more interrelated steps may be grouped into one or more stages designated to achieve a particular objective. In addition to providing an ordered structure to the different tasks, the workflow may also be utilized to assess progress of the different steps (or stages) and may assist in assessing the extent of completion of a given process. For example, the workflow may be characterized by different milestones which may delineate different steps or stages and accordingly serve as a marker to identify which steps or stages have been completed and which are yet to be initiated. Each step of the workflow may encompass one or more specific tasks or activities, referred to as action items, that need to be completed as part of the recall workflow. The successful progression through a step typically depends on the fulfillment of its associated action items, ensuring that all necessary activities are performed before moving on to subsequent step of the workflow. The one or more action items associated with a step of the workflow may be executed by an authorized user. For example, a process owner may be identified for completing specific action items of a step of workflow corresponding to the recall execution subsystem based on their expertise, role, or authority level. Information related to the workflow may be stored in the workflow data 320. The information may comprise information about steps, stages, action items to be executed in each step, authorized users for each step, sequence of execution of the steps or stages and the like.

In an example, the workflow corresponding to recall decision subsystem may comprise multiple stages such as configuration, signal detection and investigation. Each stage may be designated to achieve a particular objective with the execution of one or more steps. For instance, configuration stage may be designated with a task of setting configurations or criteria used to assess the risk associated with a product and whether it should be recalled. The configuration stage may comprise the steps of object and filters configurations, user management configurations, signal threshold configurations and the like. Object configuration may refer to specific attributes and characteristics of the product being evaluated for recall. The filter configuration may refer to the criteria or thresholds used to evaluate whether a product should be recalled based on certain factors or filters. User management configurations may refer to roles, responsibilities, and communication strategies to ensure a coordinated, efficient, and legally compliant recall process. In the context of the product recall decision process, signal threshold configuration refers to the criteria or threshold values used to determine when a product issue, such as a defect, hazard, or safety concern is significant enough to trigger a recall. Signal detection stage may refer to the identification and analysis of signals or indicators that suggest a potential safety issue, defect, or risk in a product that may require a recall. These signals may come from a variety of sources, such as customer complaints, regulatory notifications, manufacturing defects, or post-market surveillance. Signal detection stage may comprise the steps of global partitioning or reviewing events. Global partitioning may refer to a methodology or system for dividing or partitioning a global recall process based on different variables like geography, product type, severity, market segment, or regulatory requirements. While an investigation stage may comprise the steps of creation of action items to be executed during the process of recall and assigning the action items to designated process owner, perform quality investigation, perform financial or risk investigation and approval or rejection from the executive. The investigation stage aims to verify the issue, understand its scope and impact, and making an informed decision on how to proceed. This stage involves confirming the defect, conducting a root cause analysis and assessing risks.

Once the decision to recall the product is taken either through workflow corresponding to the recall decision sub-system of the system 110 or outside the system 110, an authorized user of the recall execution sub-system may be notified to start execution of the corresponding workflow for recalling the product.

In an example, the workflow corresponding to recall execution subsystem may comprise stages such as configuration and execution implementation. The configuration stage of the recall execution subsystem may comprise the step of facilities configuration and language configuration which is critical for ensuring that the recall is managed efficiently, with clear communication and robust operational infrastructure. Setting up recall centers, logistics and customer service operations, along with ensuring that all recall communications are available in the relevant languages, helps ensure that the recall is handled smoothly and in compliance with legal requirements. Another step of the configuration may comprise creating communication template, for example, for communication with consumers to return affected products, coordination for product returns, information dissemination, and consumer support. Execution stage may involve coordinating the return of products, managing communications with consignees, providing solutions (refunds, replacements, repairs), and ensuring compliance with legal and regulatory requirements.

In the workflow, different steps or stages may be executed in parallel to expedite the process of recall or may be interlinked with each other. For example, in the above example, steps of configuration stages of both of the workflows pertaining to recall decision and recall execution sub-systems may be executed in parallel. Further, initiation of execution of a step or a stage may be dependent on the completion of another stage or step. For example, execution of the step of approval or rejection from an executive of investigation stage of recall decision workflow may be dependent on the outcome of the steps of quality investigation and financial risk investigation of the same stage. At a further granular level, the execution of one or more action items associated with a step may also depend on the completion of execution of one or more action items associated with another step within the same stage or another stage. For instance, execution of the step of financial or risk investigation may comprise execution of an action item of setting a value of a variable parameter indicative of severity of defect identified in the product based on evaluation of the potential harm to consumers and the business. Execution of the step of approval or rejection from the executive may be based on the value of said parameter assigned during the step of financial or risk investigation along with other criteria that may need to be followed while taking decision of approval or rejection of recall. Such correlation between one or steps may be indicated through a correlation information. The correlation information may indicate whether completion of any given step is contingent or dependent on completion of another related or dependent step. Likewise, the correlation information may also indicate whether pendency of any given step may be blocking execution of a step dependent on completion of the given step.

In an example implementation, the correlation information module 308 may define the correlation information for each step. The correlation information may be defined by way of linking correlated steps by an administrator or may be prescribed by way of programming implementing the workflow which defines the recall process to be implemented. In an example, the correlation information may be defined by the correlation information module 308 based on one or more predefined rules. In such a case, the predefined rules may be based on one or more criteria related to one or more steps. The correlation information module 308 may, accordingly, determine one or more criteria which are common between the steps, and accordingly provide the correlation information linking the steps with common criteria. Examples of such criteria may include, but are not limited to, recall process to which the steps may correspond to, priority of steps, whether the steps are linked to one or more other common steps, etc. It may be noted that other criteria may also be relied upon for such predefined rules, based on which the correlation information module 308 may define the correlation information between one or more steps.

In an example, the correlation information module 308 may use a machine-learning based model for determining the correlation information between the steps. Such a machine-learning model may be trained based on historic data related to execution of workflows for recall of the products. The machine-learning model when trained may then be used by the correlation information module 308 to define the correlation information between one or more steps. In the context of the present example, the training data, based on which the machine-learning model is trained, may include the one or more criteria as discussed above. The training data may also include one or more attributes or variable parameters that may be historically updated during execution of the workflow for recall of the product. When trained, the correlation information module using the trained machine-learning model may accordingly determine the correlation information for each step. At a granular level, the correlation information may indicate that initiation of execution of an action item associated with a step may be caused upon completion of execution of the action item associated with another step. The correlation information associated with each step of the workflow may be stored in the correlation data 322 of the system.

During execution of the workflow for recall of the products, the correlation information module 308 may retrieve correlation information associated with each of the one or more steps of the workflow form the correlation data 322 to identify dependency between the correlated steps. For instance, the correlation information module 308 may retrieve correlation information associated with a first step of the one or more steps of the workflow from the correlation data 322 to identify a step corelated with the first step. In an example, the correlation may be predefined for each step of the workflow by the correlation information module and prestored in the correlation data 322. Alternatively, when an authorized user accesses the PRMS 102 to execute a step to which he is responsible for executing, the correlation information module 308 may determine the correlation information as described above. The correlation information identifies an action item associated with a second step, the initiation of execution of which is to be caused upon completion of execution of the action item associated with the first step. Thus, execution of the second step is dependent upon completion of execution of the first step.

Once the correlation information is retrieved for the first step, the visual depiction module 310 may, represent the same on the navigation map corresponding to the workflow on a user interface rendered on a display device that may be coupled to the system. The navigation map comprises a visual representation of each step of the workflow and may be rendered based on the data stored in the workflow data 320. For example, to visually represent a step, an icon or a block with text describing the respective step presented thereon may be displayed on the user interface. The text may include a title or identifier assigned to the step in the workflow. The icon may be a block of any shape.

The visual depiction module 310 may further represent a visual indicator based on the correlation information to the authorized user of the first step. The visual indicator depicts a logical association of a pendency of the action item associated with the second step with a pendency of the action item associated with the first step. To depict the logical association between the action items of the first and the second step, the visual indicator may be overlayed on the navigation map. The visual indicator may comprise a common shape, common color, common annotation, a notional connector, or a combination thereof. The indicator may be provided for the visual representation of the respective correlated steps, for example, the first step and the second step. In an example, a notional connector between the visual representations of the first and the second step with an arrowhead pointing towards the visual representation of the second step and linking the first step and the second step may be provided on the user interface. For example, steps of quality investigation and approval or rejection from executive may be visually represented through individual icons with title of the steps displayed on the respective icons. An arrow commencing from the icon corresponding to the step of quality investigation and pointing towards the icon corresponding to the step of approval or rejection from executive may be provided as a visual indicator between these two icons to depict a logical association of a pendency of the step of approval or rejection from executive with a pendency of the step of quality investigation. In another example, the visual indicator may comprise visually representing the correlated steps with same color or same icons. The data generated by the visual depiction module may be stored in the visual indicator data 326.

Accordingly, the navigation map depicts a dependency of execution of an action item associated with a step onto execution of an action item associated with another correlated step of the one or more steps. The navigation map indicates to an authorized user that a particular step cannot proceed forward till all other prior steps have completed or vice versa, that you can move to a particular step without all previous steps completing.

In an example, a dynamic information element corresponding to a step, e.g., the first step may be provided on the navigation map. Dynamic information elements may refer to one or more user interface elements which may be configured to receive a user's input and generate an event in response to the user's input. The event may result in generation of an output in response to the user input. Examples of such dynamic information elements may include, a text or radio button, a check box, a text field, a dropdown list and the like, which may be populated with a text corresponding to a title or identifier of the step. The dynamic information element may receive a user's input. The dynamic information element may be configured to allow the authorized user of the first step to navigate to a user interface corresponding to the first step for execution of the action item associated with the first step. For instance, a dynamic information element corresponding to a step of object and filter configuration may allow authorized user of this step to navigate to a user interface which may further allow the user to execute one or more action items such as determining specific attributes and characteristics of the product being evaluated for recall, e.g., product type, product specification, manufacturing batch and packaging.

In an example implementation, to identify the steps which are blocked from execution as a result of pendency of execution of one or more correlated steps, the status determination module 312 may determine status of each of the one or more steps based on execution of the action item associated with the respective steps. For instance, the status determination module 312 may determine statuses of the first step and the second step based on execution of the action item associated with the respective steps to identify if the second step is blocked from execution as a result of pendency of the first step. In an example, execution of action items associated with a step may result in updating values of variable parameters or attributes that may be stored in the workflow data. These values may be monitored by the status determination module 312 to determine status of the respective step. For example, execution of action items associated with the step of signal threshold configuration may result in setting values of variable or parameters to reflect a criteria or threshold values used to determine when a product issue such as a defect, hazard, or safety concern is significant enough to trigger a recall. Such parameters may be monitored to determine if the status of the step of signal threshold configuration is pending or completed. In an example implementation, the status determination module 312 may also ask the authorized users of each step to provide the status through a visual prompt and receive the status of the statuses of each step from the respective user. The status of each step may be stored in the status data 324.

In an example implementation, the visual depiction module 310 may depict statuses of each step along with visual representation of each step, for example, on the navigation map. Such depiction indicates to a user that which parallel steps have completed and that the next step is now blocked from moving forward. The user may also get visibility into what their allowed steps are. In an example, a color coding may be defined for every status. For example, a green color may depict a "completed" status, red color may depict a "pending" status. Thus, visual representation of each step may be rendered in a color defined for the respective status of the step. For example, the icon or text identifying the step as displayed on the icon may be presented in green color, if the status of the step is determined to be completed and in red color, if the status is determined to be pending. In another example, an icon with the status displayed thereon and overlapping the icon representing the step may be displayed on the user interface.

Once the status of each step is determined, the schedule generation module 314 may generate a schedule for completion of pending steps that takes into account the timelines of their dependent steps. Accordingly, if the status of the first step is determined to be pending, the schedule generation module 314 may generate a schedule for completion of execution of the action item associated with the first step based on a predefined schedule of completion of execution of the action item associated with the second step. In an example, a date of completion of the process of recall of the product may be predefined and stored in the scheduling data 328. In another example, a timeline or schedule of completion of each step of the workflow for recall of the product may be predefined and stored in the scheduling data 328. The schedule generation module 314 may fetch the predefined schedule of completion of execution of the action item associated with the second step from the scheduling data 328 and generate the schedule for completion of execution of the action item associated with the second step to enable the completion of second step in accordance with its predefined schedule. For instance, in case of above example, if the step of approval or rejection from executive is scheduled to be completed on or before 18 December 2024 and pending because of pendency of step of quality investigation, then a schedule comprising a date prior to the date of 18 December 2024 accounting an expected time required to complete the step of approval or rejection from executive may be generated. The generated schedule may be stored in the scheduling data 328. The generated schedule may also be notified to the authorized user of the first step. In an example, the generated schedule may be depicted to the authorized user of the first step through the visual indicator by displaying the generated schedule along with visual representation of the first step. The visual indicator may comprise a pop message displayed along with visual representation of the first step on the user interface, in an example. In another example, an icon with the schedule displayed thereon and overlapping the icon representing the first step may be displayed on the user interface to depict the schedule to the authorized user of the first step. Other example implementations of the depiction of schedule may also be possible.

In an example, the schedule generation module 314 may generate a notification for the authorized user of the first step based on the generated schedule. The notification may prompt the authorized user of the first step for execution of the action item associated with the first step within the time period defined by the generated schedule. The notification may be displayed along with visual representation of the first step, for example, as a pop-up message. In another example, the authorized user may be notified of the schedule, for example, based on a registered mail-id.

The status determination module 312 may monitor the execution of the first step to determine completion of execution of the action item associated with the first step. If the status of the first step is determined to be completed, the schedule generation module 314 may generate a notification for the authorized user of the second step. The notification prompts the authorized user of the second step for initiation of execution of the action item associated with the second step. The notification may be generated in a manner described above.

As described above, one or more action items are associated with a step and completion of the step requires execution of the one or more steps. In an example implementation, when more than one action items are associated with the first step and status of the first step is determined to be pending, the schedule generation module 314 may recommend a sequence for execution of action items associated with the first step of the workflow. The recommendation may be provided based on historic data related to a role of the authorized user of the first step in execution of the workflow. For instance, action taken by a user acting on a similar role as that of the user of the first step during execution of the workflows in the past may be identified. Based on such identification of the actions, a sequence of execution of the action items may be recommended. The historic data may be stored in the workflow data 320. Pendency of execution of each action item of a step may have a different impact on the execution of the action items corresponding to a dependent step. Accordingly, in an example implementation, the sequence may be recommended based on an impact of pendency of execution of the corresponding action item on the execution of the action item of the second step.

In an example, the schedule generation module 314 may classify each of one or more action items associated with the first step in one of red zone, yellow zone and green zone based on an impact of pendency of execution of the corresponding action item on the execution of the action item of the second step. The red zone, yellow zone and green zone may be indicative of high, medium and low priority of execution of the corresponding action item of the first step, respectively. For example, if the filters configuration is not completely done in the step of object and filter configuration, it may be classified in a yellow zone as that means all the data may need to be pull out from product database 108. However, if objects are not configured, then it may be classified in a red zone as it may block each subsequent step of the workflow such as signal detection, investigation and execution.

In an example implementation, data related to execution of the workflow for recall of the product may be provided to a machine learning model as training data. The machine learning model may be trained using the data to generate a sequence for execution of steps corresponding to a workflow of the process of recall of the products. In an example implementation, the machine learning model may be installed in the system 110 itself. In an example, the machine learning model may be implemented using machine learning algorithms that learn to optimize the execution of workflow for the process to recall the product. The machine learning model may include routines, programs, objects, components, data structures, and the like, which perform prediction or implement particular abstract data types. In an example implementation, the machine learning model may be incorporated in the PRMS 102.

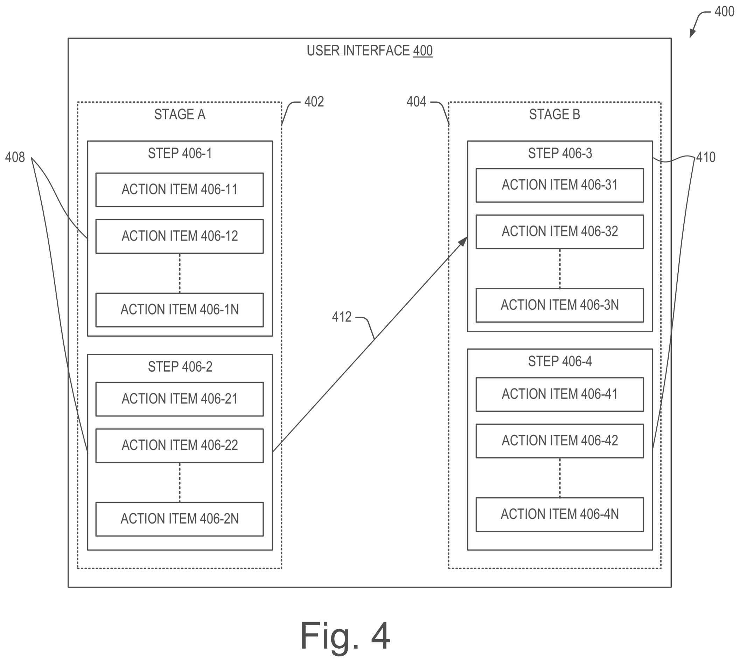

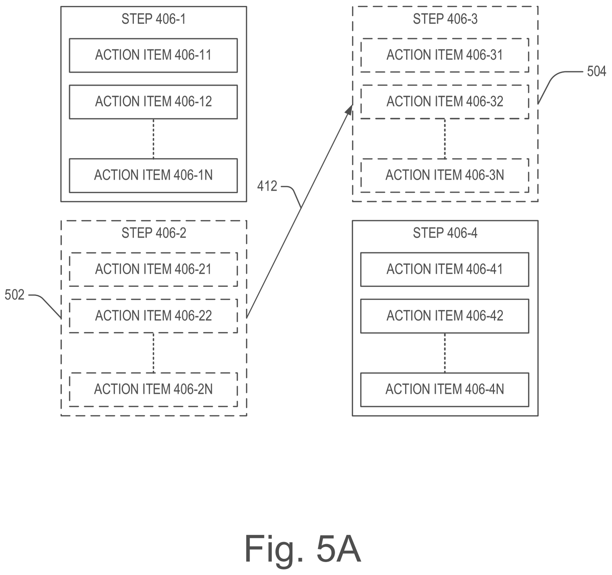

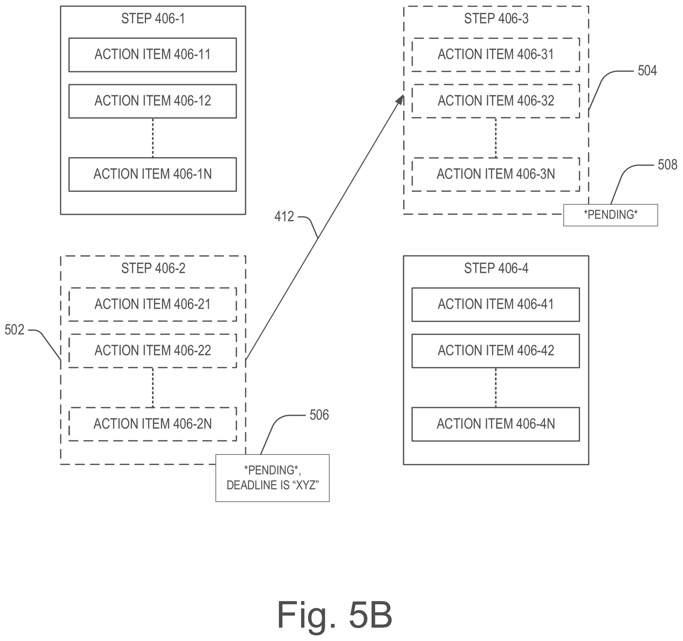

The above approaches are further explained in conjunction with example user interfaces as illustrated in Figs. 4, 5A and 5B. FIG. 4 depicts an example user interface 400 rendered by the system 110. The user interface 400 may be rendered onto a display device which may be coupled with the system 110. In an example, the user interface 400 may be rendered by the visual depiction module 310. The user interface 400 may include a visual representation or blocks 402 representing a stage A of the workflow executed by the PRMS 102 for recall of the product. The user interface 400 may further include another block 404 representing another stage B. It may be noted that although the present example user interface 400 is shown as displaying the blocks 402, 404 for two stages of the workflow, the user interface 400 may depict multiple other stages without deviating from the scope of the present subject matter.

As also discussed previously, the stages A and B may further include one or more steps, such as steps 406-1, 406-2, and steps, 406-3, 406-4, respectively. The respective steps 406-1, 406-2 and 406-3 and 406-4 may again be represented by individual blocks 408 and 410. One or more action items may be associated with each step and required to be executed by a corresponding authorized user. For example, action items 406-11, 406-12, ..., 406-1N may be associated with step 406-1. Similarly, action items 406-21, 406-22, ..., 406-2N may be associated with step 406-2, action items 406-31, 406-32, ..., 406-3N may be associated with step 406-3 and action items 406-41, 406-42, ..., 406-4N may be associated with step 406-4. A correlation information may be associated with each step 406-1, 406-2, 406-3 and 406-4. The correlation information associated with a step identifies one or more correlated steps dependent on said step. The correlation information module 308 may retrieve the correlation information from the correlation data 322. Based on the correlation information, the correlation information module 308 may determine that the step 406-2 and the step 406-3 are correlated and initiation of execution of the action items 406-21, 406-22, ..., 406-2N associated with step 406-2 is to be caused upon completion of execution of the action items 406-31, 406-32, ..., 406-3N associated with step 406-3. The correlation between the steps 406-2 and 406-3 may be represented by the visual depiction module 310 through visual indicator as discussed in conjunction with previous figure depicting a logical association of a pendency of the action items associated with the step 406-3 with a pendency of the action items associated with the step 406-2. The visual indicator may be overlayed onto the visual representations of steps 406-2 and 406-3. In Fig. 4, the indicator is depicted as a straight line 412 which is linking the visual representation of step 406-2 to the step 406-3, with both the step 406-2 and the step 406-3 being represented as blocks. The straight line comprises an arrowhead pointing towards the step 406-3. Although the user interface 400 depicts the line 412, it may be noted that other indications may be provided by overlaying the visual representations of the steps with one or more such indications. The status determination module 312 may determine the status of the steps 406-1, 406-2, 406-3 and 406-4 based on execution of the one or more action items associated with the respective steps. Based on the determination, statuses of steps 406-2 and 406-3 are identified as pending. Based on correlation information, it can be ascertained that the step 406-3 is pending as a result of pendency of the step 406-2. The visual indicator may depict status of the step. For example, various icons or other representative elements may be overlaying the step 406-2 and the step 406-3 to indicate that the step 406-2 and the step 406-3 are pending, with the line 412 depicting the association of pendency of the step 406-2 and the step 406-3. Such examples would also fall within the scope of the present subject matter.

Fig. 5A and 5B provide various other example illustrations of visual indicator. It is pertinent to note that such example illustrations are indicative and are not to be considered as limiting the scope of the present subject matter in any way. Fig. 5A depicts the visual indicator by way of representing the step 406-2 and the step 406-3 by a common shape. In the present example, the step 406-2 and the step 406-3 being correlated and dependent, are represented by way of a dotted blocks 502 and 504, respectively, as opposed to solid block representing other steps 406-1 and 406-4. In another example, the blocks 502-504 may be further annotated by additional icon(s) or annotations which may further aid in identifying the pending and the correlated tasks. This is depicted in Fig. 5B in which dotted blocks 502 and 504 are further annotated by information elements depicting one or more information pertaining to the corresponding steps, such as the step 406-2 and the step 406-3. When step 406-2 is pending, the schedule generation module 314 may generate a schedule for completion for completion of execution of the one or more action items associated with the step 406-2 based on a predefined schedule of completion of execution of the one or more action items associated with the step 406-3. The visual indicator may depict the generated schedule to an authorized user of the step 406-2. In the present example, the annotations 506 and 508 may provide information pertaining to the step 406-2 and the step 406-3. Examples of such information may include, but are not limited to, status of the steps, schedule of completion. It may be noted that such examples are indicative and are not to be construed as limiting the scope of the present subject matter.

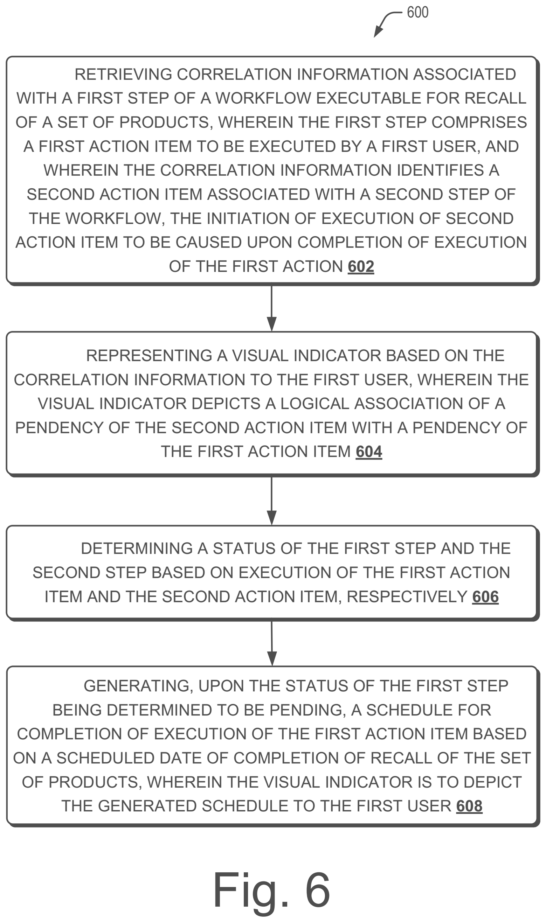

Fig. 6 illustrates a method 600 for managing workflows executed by a PRMS, according to an example. Although the method 600 may be implemented in a variety of computer-based systems, for the ease of explanation, the present description of the example method 600 is provided in reference to the above-described system 110.

The order in which the method 600 is described is not intended to be construed as a limitation, and any number of the described method blocks may be combined in any order to implement the method 600, or an alternative method. Furthermore, the method 600 may be implemented by processor(s) or computing device(s) through any suitable hardware, non-transitory machine-readable instructions, or combination thereof.

It may be understood that blocks of the method 600 may be performed by programmed computing devices. The blocks of the method 600 may be executed based on instructions stored in a non-transitory computer-readable medium, as will be readily understood. The non-transitory computer-readable medium may include, for example, digital memories, magnetic storage media, such as magnetic disks and magnetic tapes, hard drives, or optically readable digital data storage media.

As discussed above, a workflow may comprise an ordered set of steps, each comprising an action item to be executed by a corresponding authorized user. For example, the action items may be specific task or activities ranging from assigning roles to key personnel to collecting crucial product data. Thus, the workflow follows a predetermined order, with some steps relying on the completion of others. This interdependence may be recorded as correlation information for each step. The correlation information may identify which action items in subsequent steps depend on the completion of the current step. For example, a "decision to recall" step may not begin until the "risk assessment" step is completed.

Referring to Fig. 6, at block 602, correlation information associated with a first step of a workflow executable by the PRMS for recall of a set of products may be retrieved, for example, by the correlation information module 308 of the system 110. In an example, the correlation information may be predefined by the correlation information module 308 based on predefined rules. The rules may be based on predefined criteria such as the process for recall of the set of products and compliance with regulatory requirements. The first step may comprise a first action item to be executed by a first user. The correlation information may identify a second action item associated with a second step of the workflow. The initiation of execution of second action item is to be caused upon completion of execution of the first action.

Once the correlation information is retrieved, the correlation information may be presented to authorized users through visual indicators. At block 604, a visual indicator may be presented by the visual depiction module 310 based on the correlation information to the first user. The visual indicator may depict a logical association of a pendency of the second action item with a pendency of the first action item. The visual indicator may be information overlaying onto visual representations of the steps on a user interface that may be rendered on a display device coupled to the system 110. The visual representation of a step may comprise an icon with information identifying the step overlayed thereon. For example, to depict a logical association between the first step and the second step, a link between the visual representations of the first step and the second step may be represented through an arrow commencing from the visual representation of the first step and pointing towards the visual representation of the second step.

At block 606, a status of the first step and the second step may be determined, for example, by the status determination module 314, based on execution of the first action item and the second action item, respectively. The status determination module may determine status of a step by tracking changes in one or more variables or parameters that may be updated during execution of one or more action items associated with the step. For example, completing a step of signal threshold configuration in food product recall might involve assigning a value, e.g., 0.1 parts per million of a certain pesticide to trigger a recall. Additionally, the complaint threshold may be set at 5 customer reports per day of illness caused by consuming the product. These parameters may be tracked by the status determination module to determine the status of the step of signal threshold configuration.

If the status of the first step is determined to be pending, at block 608, a schedule for completion of execution of the first action item may be generated, for example, by the schedule generation module 314 based on a scheduled date of completion of recall of the set of products. For instance, a schedule may be generated based on timelines of dependent steps which may further be based on scheduled date of completion of the process. The schedule may be depicted to the first user through the visual indicator. The visual indicator may be updated to reflect the information such as status or schedule of completion. This visual representation and scheduling provide users with clear visibility of workflow dependencies and timelines. It facilitates timely initiation of subsequent steps and promotes smooth, synchronized execution of the entire recall process.

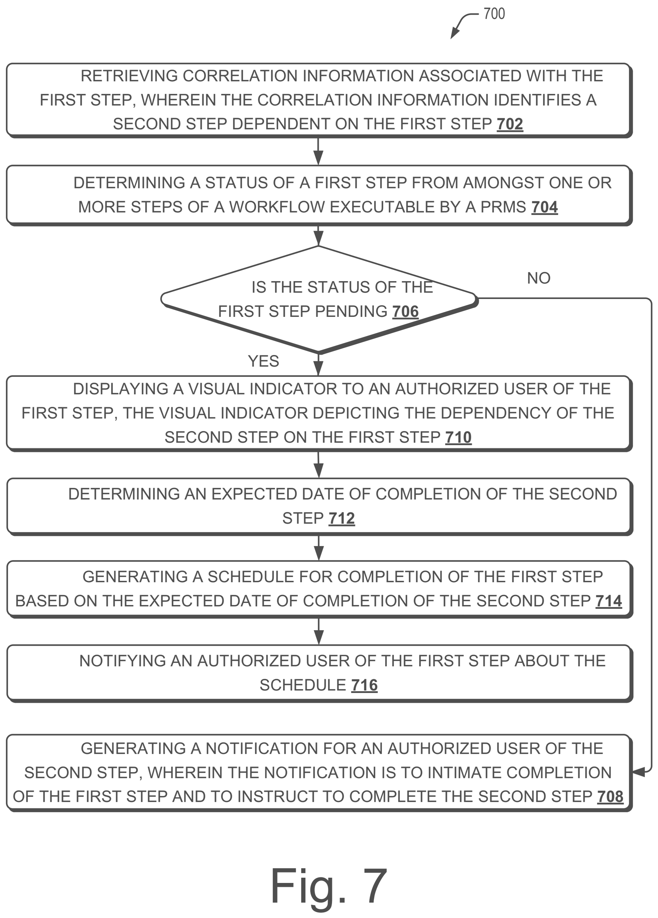

Fig. 7 illustrates a method 700 for managing workflows executed by a PRMS, according to an example. Although the method 700 may be implemented in a variety of computer-based systems, for the ease of explanation, the present description of the example method 700 is provided in reference to the above-described system 110.

The order in which the method 700 is described is not intended to be construed as a limitation, and any number of the described method blocks may be combined in any order to implement the method 700, or an alternative method. Furthermore, the method 700 may be implemented by processor(s) or computing device(s) through any suitable hardware, non-transitory machine-readable instructions, or combination thereof.

It may be understood that blocks of the method 700 may be performed by programmed computing devices. The blocks of the method 700 may be executed based on instructions stored in a non-transitory computer-readable medium, as will be readily understood. The non-transitory computer-readable medium may include, for example, digital memories, magnetic storage media, such as magnetic disks and magnetic tapes, hard drives, or optically readable digital data storage media.

A workflow executable by a PRMS comprises a sequence of interconnected steps, each involving specific tasks or action items assigned to authorized users working on the PRMS for recall of a product. These action items vary widely, from identifying detailed characteristics and identifiers of the product being evaluated for recall, to identifying the cause, scope, and potential impact of a product defect or safety issue.

The workflow progresses in an ordered manner, with certain steps contingent on the completion of preceding ones. This dependency structure is captured in correlation information for each step based on predefined rules, detailing which subsequent tasks are reliant on the current step's completion. For instance, initiating an "approval or rejection from executive" step is only possible after the "risk investigation" step concludes.

Referring to Fig. 7, at block 702, correlation information associated with a first step from amongst one or more steps of the workflow executable by the PRMS is retrieved by the correlation information module 308. The correlation information identifies a second step dependent on the first step. Execution of one or more action items associated with the second step may be initiated, once execution of one or more action items associated with the first step is completed.

At block 704, a status of the first step may be determined by the status determination module 312 of the system 110, for example, based on monitoring execution of the one or more action items associated with the first step. In an example, changes in relevant variables or parameters may be monitored to determine the status.

Based on the determination made at step 704, at block 706, a determination is made as to whether the status of the first step is pending. If the result of determination is negative, the method proceeds to block 708, at which a notification may be generated for an authorized user of the second step to intimate completion of the first step and to instruct to complete the second step.

If the result of determination at block 706 is affirmative, the method proceeds to block 710, at which a visual indicator may be displayed to an authorized user of the first step by the visual depiction module 310. This visual indicator demonstrates a logical link between the pending status of the first and the second steps. The visual indicator may be depicted on a user interface displayed on a display device coupled to the system 110 overlaying a navigation map comprising visual representations of steps. In an example, the visual indicator may comprise directional connectors connecting related steps to illustrate their interdependencies.

The method 700 further proceeds to block 712. At block 712, an expected date of completion of the second step may be determined, for example, by the schedule generation module 314. The expected date of completion of the second step may be predefined in a timeline specified, for example, by a project recall manager for recall of the product or may be determined by the schedule generation module 314 based on a scheduled date of completion of recall of the product.

At block 714, a schedule for completion of the first step may be generated by the schedule generation module 314 based on the expected date of completion of the second step considering an expected duration of time required for completion of the second step. In an example, the expected duration of time required for completion of a step, e.g., the first step and the second step may be determined based on an input from a machine learning based model. The model may be trained based on historic data related to execution of workflows for recall of the set of products.

At block 716, an authorized user of the first step may be notified about the schedule so that the user may expedite the completion of the first step to allow timely completion of the second step. In an example, the visual indicator may depict the generated schedule. In an example, a notification may also be generated for authorized user of the first step based on the expected time required to complete the first step and the second step to prompt the user to complete the execution of one or more action items associated with the first step.

This visual representation and dynamic scheduling provide users with a clear overview of workflow dependencies and timelines. For example, a quality assurance manager can see that they need to complete the risk assessment within 5 days to keep the recall process on track, facilitating efficient coordination and timely execution of the entire recall procedure.

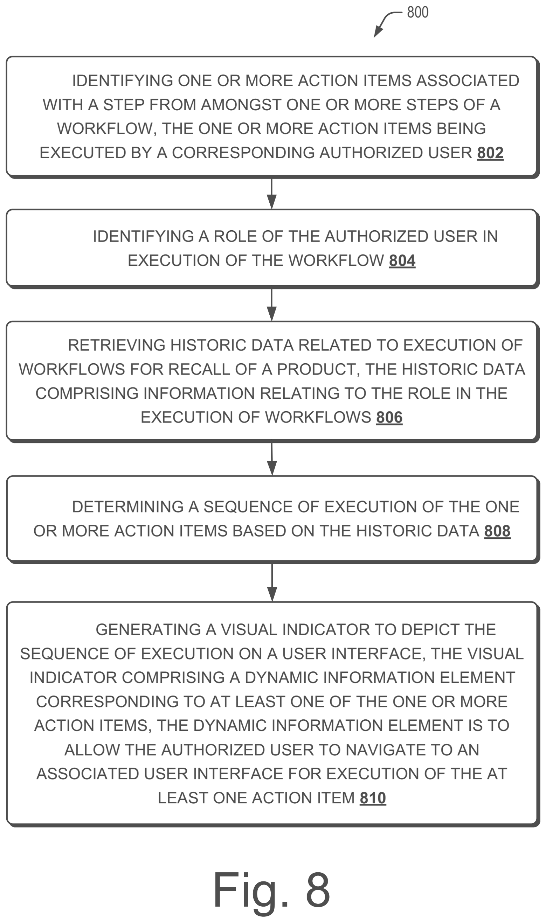

Fig. 8 illustrates a method 800 for managing workflows executed by a PRMS, according to an example. Although the method 800 may be implemented in a variety of computer-based systems, for the ease of explanation, the present description of the example method 800 to manage workflows executed by the PRMS is provided in reference to the above-described system 110.

The order in which the method 800 is described is not intended to be construed as a limitation, and any number of the described method blocks may be combined in any order to implement the method 800, or an alternative method. Furthermore, the method 800 may be implemented by processor(s) or computing device(s) through any suitable hardware, non-transitory machine-readable instructions, or combination thereof.

It may be understood that blocks of the method 800 may be performed by programmed computing devices. The blocks of the method 800 may be executed based on instructions stored in a non-transitory computer-readable medium, as will be readily understood. The non-transitory computer-readable medium may include, for example, digital memories, magnetic storage media, such as magnetic disks and magnetic tapes, hard drives, or optically readable digital data storage media.

At block 802, one or more action items associated with a step from amongst one or more steps of a workflow executable by the PRMS may be identified, for example, by a schedule generation module 314. The one or more action items may be executed by a corresponding authorized user of the step.

At block 804, a role of the authorized user in execution of the workflow may be identified, for example, by the schedule generation module 314. The role of the user may be predefined, for example, by the business administrator who does application configurations like users' management, roles management, threshold configurations or data sources configurations. In an example, recall project manager generally does the project management for recall decisions, investigations and executions. Process owners and quality managers do the scientific investigation and evaluations. Finally, executive managers do the approvals or rejections based on work done by other users.

At block 806, historic data related to execution of workflows for recall of a product may be retrieved by the schedule generation module 314. The historic data may comprise information relating to the role in the execution of workflows. For instance, if the role of the authorized user is identified as business administrator, then historic data may reveal that a business administrator has performed the steps of configuration stage in the workflows executed by the PRMS in past.

At block 808, a sequence of execution of the one or more action items may be determined based on the historic data, for example, by the schedule generation module 314. For example, if a role of the authorized user is similar to that of a quality manager, past actions taken by quality managers in workflows for recall of the product may be analyzed. Based on this analysis, an optimal sequence of execution of the one or more action items for completion of the current step may be determined. In another example, it may be determined from analysis of historic data that the business administrator has performed the action of object's configuration before the action of filter's configuration since pendency of object's configuration has a more severe impact on the execution of subsequent steps in the workflow. Based on such analysis, a sequence of performing action items pertaining to the step of object and filter configuration may be determined.

At block 810, a visual indicator may be generated by the visual depiction module to depict the sequence of execution. The visual indicator may be overlayed on a navigation map depicting visual representation of the workflow rendered on a user interface displayed on a display device coupled to the system 110. In an example, the visual indicator may comprise a dynamic information element corresponding to at least one of the one or more action items. The dynamic information elements may be overlayed on the navigation map. The dynamic information element may allow the authorized user to navigate to an associated user interface for execution of the at least one action item. The dynamic information element may be a user interface element that may receive a user's input such as radio or text button, drop down list or check box list. The dynamic information element corresponding to at least one action items from amongst the one or more action items with text describing the respective action item may be displayed in accordance with the sequence of execution.

By providing this prioritized sequence, the users are allowed focus on the most critical action items first, ensuring smoother progression through the workflow and minimizing potential bottlenecks in the recall process.

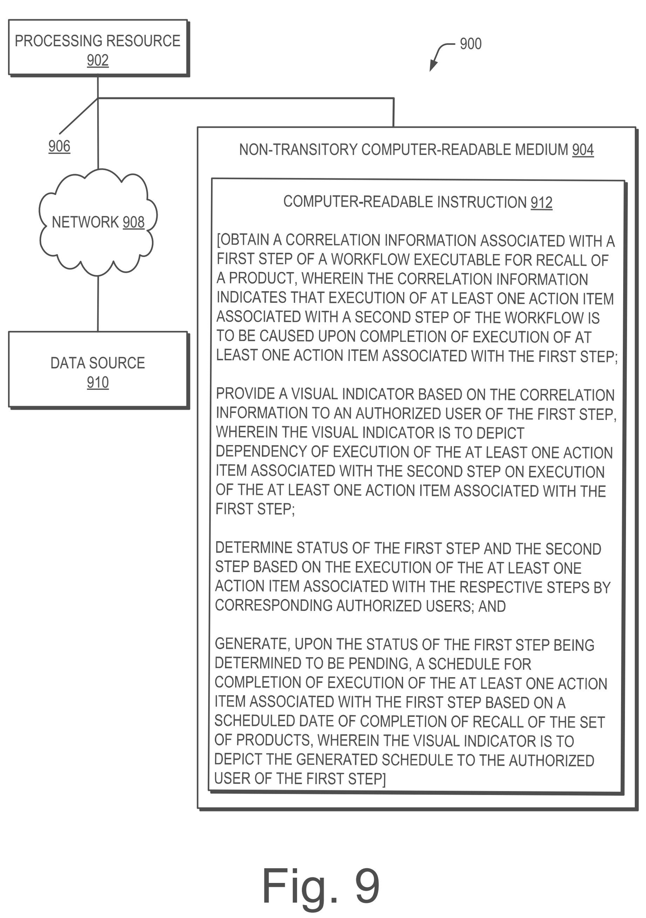

Fig. 9 illustrates a computing environment 900 for managing workflows executed by a PRMS, according to an example. In an example implementation, the computing environment 900 may comprise a computing device, such as the above-described system 110. The computing environment 900 includes a processing resource 902 communicatively coupled to the non-transitory computer-readable medium 904 through a communication link 906. In an example, the processing resource 902 may be a processor of the computing device, such as the processor 202 of the system 110, that fetches and executes computer-readable instructions from the non-transitory computer-readable medium 904.

The non-transitory computer-readable medium 904 can be, for example, an internal memory device or an external memory device. In an example implementation, the communication link 906 may be a direct communication link, such as any memory read/write interface. In another example implementation, the communication link 906 may be an indirect communication link, such as a network interface. In such a case, the processing resource 902 can access the non-transitory computer-readable medium 904 through a network 908. The network 908 may be a single network or a combination of multiple networks and may use a variety of different communication protocols.

The processing resource 902 and the non-transitory computer-readable medium 904 may also be communicatively coupled to data sources 910. In an example implementation, the non-transitory computer-readable medium 904 comprises executable instructions 912 for managing workflows executed by the PRMS. A workflow executable by the PRMS 102 implements a process to recall a product. The workflow may comprise one or more steps. Execution of a step of the workflow may comprise execution of one or more action items associated with the step and may be dependent on execution of one or more other correlated steps of the workflow.

In an example, the instructions 912 may cause the processing resource 902 to obtain a correlation information associated with a first step of the workflow executable for recall of the product. The correlation information indicates that execution of at least one action item associated with a second step of the workflow is to be caused upon completion of execution of at least one action item associated with the first step. The correlation information may be created by an administrator based on business rules or regulatory requirements.

Once the correlation information is retrieved, the instructions 912 may also cause the processing resource 902 to provide a visual indicator based on the correlation information to an authorized user of the first step. The visual indicator depicts dependency of execution of the at least one action item associated with the second step on execution of the at least one action item associated with the first step. The visual indicator may be overlayed on a navigation map depicting visual representation of one or more steps on a user interface rendered on a display device coupled to the system 110. In an example, the visual indicator includes directional connectors between visual representations of two correlated steps such as the first step and the second step.

In an example, the instructions 912 when executed may further cause the processing resource 902 to determine status of the first step and the second step based on the execution of the at least one action item associated with the respective steps by corresponding authorized users. In an example, status of a step may be determined by tracking values of one or more parameters that may be updated during execution of the at least one action item associated with the step. For example, in case of recall of a specific model of coffee maker, an action item corresponding to the step of object and filter configuration may comprise determination of model number, manufacturing batch, and the specific type of heating element used in the coffee maker. The parameters identifying such data may be tracked along with other parameters that may be updated as a result of execution of other action items associated with the step of object and filter configuration.

Upon determining that the status of the first step is pending, the instructions 912 may further cause the processing resource 902 to generate a schedule for completion of execution of the at least one action item associated with the first step based on a scheduled date of completion of recall of the set of products. Based on the scheduled date of completion of the recall, the schedule for the first step may be generated taking into consideration an expected time required for execution of subsequent dependent steps such as the second step. The visual indicator may also depict the generated schedule to the authorized user of the first step. In an example, the visual indicator comprises information including the schedule overlayed onto a visual representation of the first step.

In an example implementation, if the status of the first step is determined to be pending, the instructions 912 may further cause the processing resource 902 to generate a notification for the authorized user of the first step based on the generated schedule. The notification may prompt the authorized user of the first step for execution of the at least one action item associated with the first step to allow timely initiation of the execution of the at least one action item associated with the second step.

Pendency of each of the at least one action item associated with a step may have varying levels of impact on a dependent step. Accordingly, if the status of the first step is determined to be pending, the instructions 912 may also cause the processing resource 902 to prioritize execution of the at least one action item associated with the first step based on an associated impact of pendency of execution of the corresponding action item on execution of the at least one action item of the second step. An impact of pendency of execution of an action item of a step on execution of the at least one action item of another correlated step may be determined based on historic data related to execution of the workflow for recall of the product. The execution of the at least one action item associated with the first step may also be prioritized based on historic data related to a role of the authorized user of the first step in execution of the workflow. The instructions 912 may cause the processing resource 902 to notify the authorized user of the first step about priority of execution of the at least one action item associated with the first step.

In an example implementation, upon determining that the status of the first step is completed, the instructions 912 may further cause the processing resource 902 to generate a notification for the authorized user of the second step. The notification may comprise an intimation of completion of the first step and instructions to initiate execution of the at least one action item associated with the second step.

Thus, the methods and systems of the present subject matter provide for managing workflows executed by a PRMS. Although implementations of managing workflows have been described in a language specific to structural features and/or methods, it is to be understood that the appended claims are not necessarily limited to the specific features or methods described. Rather, the specific features and methods are disclosed as example implementations of managing workflows.

## Claims

1. A system for managing workflows executed by a product recall management system (PRMS), the system comprising:
a processor to:
for a workflow comprising one or more steps of a process executable by the product recall management system for recall of a product, retrieve correlation information associated with a first step of the one or more steps, wherein
each of the one or more steps comprises an action item to be executed by a corresponding user, and wherein
the correlation information identifies an action item associated with a second step of the one or more steps, the initiation of execution of which is to be caused upon completion of execution of the action item associated with the first step;
represent a visual indicator based on the correlation information to an authorized user of the first step, wherein the visual indicator depicts a logical association of a pendency of the action item associated with the second step with a pendency of the action item associated with the first step;
determine a status of the first step and the second step based on execution of the action item associated with the respective steps; and
generate, upon the status of the first step being determined to be pending, a schedule for completion of execution of the action item associated with the first step based on a predefined schedule of completion of execution of the action item associated with the second step, wherein
the visual indicator is to depict the generated schedule to the authorized user of the first step.

2. The system as claimed in claim 1, wherein the processor is to
generate a notification for the authorized user of the first step based on the generated schedule, wherein the notification is to prompt the authorized user of the first step for execution of the action item associated with the first step.

3. The system as claimed in claim 1, wherein the processor is to
generate, upon the status of the first step being determined to be completed, a notification for the authorized user of the second step, wherein the notification is to prompt the authorized user of the second step for initiation of execution of the action item associated with the second step.

4. The system as claimed in claim 1, wherein the correlation information is determined based on a machine learning based model, wherein the model is trained based on historic data related to execution of workflows for recall of the product.

5. The system as claimed in claim 1, wherein the processor is to
generate a navigation map corresponding to the workflow, wherein the navigation map is to depict a dependency of execution of an action item associated with a step onto execution of an action item associated with another correlated step of the one or more steps.

6. The system as claimed in claim 5, wherein the processor is to
receive statuses of each of the one or more steps from the authorized users of the respective steps, wherein the navigation map is to depict status of each of the one or more steps.

7. The system as claimed in claim 6, wherein the processor is to
provide a dynamic information element corresponding to the first step on the navigation map, wherein the dynamic information element is to allow the authorized user of the first step to navigate to a user interface corresponding to the first step for execution of the action item associated with the first step.

8. The system as claimed in claim 1, wherein the processor is to
recommend, based on historic data related to a role of the authorized user of the first step in execution of the workflow, a sequence for execution of action items associated with the first step of the workflow when more than one action items are associated with the first step.

9. The system as claimed in claim 1, wherein the processor is to
provide data related to execution of the workflow, as training data to a machine learning model to be trained to generate a sequence for execution of steps corresponding to a workflow of the PRMS.

10. A method for managing workflows executed by a product recall management system, the method comprising:
retrieving correlation information associated with a first step of a workflow executable for recall of a set of products, wherein the first step comprises a first action item to be executed by a first user, and wherein the correlation information identifies a second action item associated with a second step of the workflow, the initiation of execution of the second action item to be caused upon completion of execution of the first action;
representing a visual indicator based on the correlation information to the first user, wherein the visual indicator depicts a logical association of a pendency of the second action item with a pendency of the first action item;
determining a status of the first step and the second step based on execution of the first action item and the second action item, respectively, and
generating, upon the status of the first step being determined to be pending, a schedule for completion of execution of the first action item based on a scheduled date of completion of recall of the set of products, wherein the visual indicator is to depict the generated schedule to the first user.

11. The method as claimed in claim 10, wherein the method comprises:
notifying, upon the status of the first step being determined to be completed, the second user about completion of the first step.

12. The method as claimed in claim 10, wherein to depict the logical association, the visual indicator comprises a common shape, common color, common annotation, a notional connector, or a combination thereof, rendered on a display and linking the first step and the second step.

13. The method as claimed in claim 10, wherein the method comprises:
determining an expected duration of time required to complete the first step and the second step based on an input from a machine learning model, wherein the model is trained based on historic data related to execution of workflows for recall of the set of products.

14. The method as claimed in claim 13, wherein the method comprises:
generating, upon the status of the first step being determined to be pending, a notification for the first user based on the expected duration of time required to complete the first step and the second step, wherein the notification is to prompt the first user for execution of the first action item.

15. A non-transitory computer-readable medium comprising instructions executable by a processing resource to:
obtain a correlation information associated with a first step of a workflow executable for recall of a product, wherein the correlation information indicates that execution of at least one action item associated with a second step of the workflow is to be caused upon completion of execution of at least one action item associated with the first step;
provide a visual indicator based on the correlation information to an authorized user of the first step, wherein the visual indicator is to depict dependency of execution of the at least one action item associated with the second step on execution of the at least one action item associated with the first step;
determine status of the first step and the second step based on the execution of the at least one action item associated with the respective steps by corresponding authorized users;
generate, upon the status of the first step being determined to be pending, a schedule for completion of execution of the at least one action item associated with the first step based on a scheduled date of completion of recall of the set of products, wherein the visual indicator is to depict the generated schedule to the authorized user of the first step.
